# EUROPEAN PATENT APPLICATION

(11) **EP 1 923 692 A1**
(43) Date of publication of application: **21.05.2008**
(21) Application number: 07706406.1
(22) Date of filing: 09.01.2007
(51) Int. Cl.: G01N 21/35

(54) **OPTICAL MEASURING APPARATUS AND WIDE-BAND LIGHT SOURCE DEVICE ADAPTABLE TO SAME**

(30) Priority: 20.01.2006 JP 2006013007
(71) Applicant: Sumitomo Electric Industries, Ltd., Osaka-shi, Osaka 541-0041 (JP)
(72) Inventor: OKUNO, Toshiaki, Kanagawa 244-8588 (JP)
(74) Representative: HOFFMANN EITLE
(86) International application number: PCT/JP2007/050059
(87) International publication number: WO 2007/083533

(57) **Abstract**

The present invention relates to an optical measurement apparatus and wideband light source apparatus equipped with a structure for making it possible in optical measurement utilizing light in a near-infrared region to expand the measurement range to the longer wavelength side in the near-infrared region. The optical measurement apparatus comprises a wideband light source apparatus for outputting irradiation light to irradiate an object to be measured, and a detector for detecting the light arriving from the object irradiated with the irradiation light. The wideband light source apparatus comprises a light source section, and an optical fiber for expanding the spectrum width in an intensity spectrum of seed light from the light source section. In particular, the wideband light source apparatus outputs light having an intensity spectrum with an expanded spectrum width within the optical fiber as irradiation light so as to maintain such a spectrum intensity as to compensate for the decrease in light-receiving sensitivity of the detector in a wavelength region in at least a part of a sensitivity-decreasing region of 2 µm to 3 µm where the light-receiving sensitivity of the detector decreases in the near-infrared region.

## Description

### Technical Field

The present invention relates to an optical measurement apparatus utilizing light in a near-infrared region and a wideband light source apparatus employable therein.

### Background Art

Typically, in optical measurement such as spectral measurement, an object to be measured is irradiated with light outputted from a light source apparatus, and light having interacted with the object (e.g., reflected light or transmitted light) is detected by a detector. In such optical measurement, the light outputted from the light source apparatus is desired to have a wide wavelength region. Also, the detector is demanded to have a high light-receiving sensitivity in a desirable wavelength region. As a technique for outputting wideband light having a wide wavelength range, there is a wideband light source apparatus which expands the spectrum width of seed light outputted from a light source (see Patent Document 1 and Nonpatent Document 1). As a detector in optical measurement, one constructed by utilizing InGaAs has been in use, for example.
Patent Document 1: Japanese Patent Application Laid-Open No. HEI 1-160744
Nonpatent Document 1: Toshiaki Okuno et al., "Wideband near-infrared pulsed laser light source employing nonlinearity of optical fiber", Proceedings of the 21st Japanese NIR Forum, Nov. 9-11, 2005, p. 173, Japan Council of Near Infrared Spectroscopy.

### Disclosure of the Invention

### Problems that the Invention is to Solve

The inventors studied the conventional optical measurement technique and, as a result, have found the following problem. In the field of optical measurement, the importance of spectrum techniques in the near-infrared region, for example, has rapidly been reaffirmed. In particular, the wavelength region of 1 µm to 3 µm is not only important for measurement because harmonics and combined tones of various molecular vibrations are observed, but also makes it easier to yield information of a deeper part of the object since scattering loss becomes smaller than in visible and UV regions, so that its utilization in various forms has been under consideration.

As compared with silicon detectors which have a favorable receiving sensitivity in the visible region and are inexpensive, however, detectors having a favorable sensitivity in the near-infrared region are hard to manufacture, thereby increasing the manufacturing cost in general. Also, detectors utilizing InGaAs, which have conventionally been in relatively wide use, have generally been limited for use in wavelength regions up to about 1.7 µm, and mostly fail to yield a sufficient light-receiving sensitivity with respect to light having a wavelength exceeding 2 µm. As a result, the measurement range on the longer wavelength side of the near-infrared region has been limited.

For solving the problem mentioned above, it is an object of the present invention to provide an optical measurement apparatus equipped with a structure for making it possible in optical measurement utilizing light in a near-infrared region to expand the measurement range to the longer wavelength side in the near-infrared region and a wideband light source apparatus employable therein.

### Means for Solving the Problems

The optical measurement apparatus according to the present invention is an optical measurement apparatus utilizing light in a near-infrared region and comprises, at least, a wideband light source apparatus and a detector. The wideband light source apparatus has an optical fiber and a light source section for outputting seed light supplied to the optical fiber. The optical fiber inputs the seed light outputted from the light source section as irradiation light and generates light having an intensity spectrum with an expanded spectrum width. The detector detects light arriving from an object to be measured which is irradiated with the irradiation light.

In the optical measurement apparatus according to the present invention in particular, the irradiation light outputted from the wideband light source apparatus has an intensity spectrum compensating for the wavelength dependency of the light-receiving sensitivity of the detector. In other words, the wideband light source apparatus outputs light having an intensity spectrum with an expanded spectrum width as the irradiation light within the optical fiber so that such a spectral intensity as to compensate for a decrease in the light-receiving sensitivity of the detector on the longer wavelength side where the light-receiving sensitivity of the detector decreases in the near-infrared region, i.e., in a wavelength region in at least a part of a sensitivity-decreasing region of 2 µm to 3 µm.

In the structure mentioned above, since the spectrum width of the irradiation light outputted from the wideband light source apparatus is expanded by the optical fiber at least to the longer wavelength side within the near-infrared region, the irradiation light compensates for the wavelength dependency of the light-receiving sensitivity of the detector on the longer wavelength side where the light-receiving sensitivity of the detector decreases. In this case, the amount of light received increases on the longer wavelength side of a wavelength where the light-receiving sensitivity of the detector decreases, whereby the measurable wavelength can effectively be expanded to the longer wavelength side.

Preferably, in the optical measurement apparatus according to the present invention, the wideband light source apparatus outputs irradiation light having such an intensity spectrum as to yield a positive wavelength-differentiated value in a sensitivity-decreasing region where the light-receiving sensitivity of the detector decreases, i.e., a wavelength region in at least a part of 2 µm to 3 µm on the longer wavelength side of the near-infrared region. In this case, a wavelength region where the spectral intensity of irradiation light increases also exists in the wavelength region of 2 µm to 3 µm (the sensitivity-decreasing region of the detector), whereby the wavelength dependency of light-receiving sensitivity in the detector can be compensated for more reliably.

Preferably, in the optical measurement apparatus according to the present invention, the detector has an operation temperature of 100 K or more. In this case, aggressive cooling to 100 K or lower as in conventional near-infrared detectors is unnecessary. Also, no large and expensive equipment for cooling the detector is necessary, whereby the cost of manufacturing the optical measurement apparatus can be cut down.

Preferably, in the optical measurement apparatus according to the present invention, the optical fiber expands the spectrum width of light incident thereon by utilizing a nonlinear phenomenon. In this case, the intensity spectrum characteristic of irradiation light can easily be controlled by choosing the optical fiber and adjusting a condition under which the seed light is inputted from the light source section to the optical fiber. Specifically, highly nonlinear optical fibers, dispersion-flat fibers, dispersion-shifted fibers, and the like can be used as the optical fiber, while polarization-maintaining optical fibers are more preferred. When the seed light from the light source section is fed into such an optical fiber, supercontinuum light is generated as the irradiation light. When the irradiation light is supercontinuum light, the structure of the wideband light source apparatus can be simplified.

Preferably, in the optical measurement apparatus according to the present invention, the wideband light source apparatus outputs irradiation light whose maximum spectral intensity is higher by 3 dB or more than a minimum spectral intensity on the shorter wavelength side of a wavelength yielding the maximum spectral intensity in the wavelength region of 2 µm to 3 µm. This structure can more reliably expand the measurable wavelength region, since the spectral intensity is higher by 3 dB or more on the longer wavelength side within the near-infrared region.

In the optical measurement apparatus according to the present invention, the wideband light source apparatus outputs irradiation light having such an intensity spectrum that a spectrum width yielding a spectral intensity differing by 20 dB or less from the maximum spectral intensity is 200 nm or more. In other words, when the spectrum width of irradiation light is represented by the distance between wavelengths exhibiting a spectral intensity lower by 20 dB than the maximum spectral intensity, the irradiation light yielding the spectrum width of 200 nm or more is outputted. When the irradiation light has a spectrum width of 200 nm or greater, optical measurement in a wider wavelength region is possible.

Preferably, in the optical measurement apparatus according to the present invention, the wideband light source apparatus further comprises an optical filter arranged downstream of the optical fiber where the light generated in the optical fiber reaches. This optical filter changes the intensity spectrum characteristic of the light generated in the optical fiber. In this case, the intensity spectrum characteristic of the irradiation light can easily be controlled by the detector.

Preferably, in the optical measurement apparatus according to the present invention, the detector includes a detector constructed by utilizing a material containing at least InGaAs. The detector utilizing InGaAs is inexpensive and usable without cooling. As a result, the cost for manufacturing the optical measurement apparatus can be cut down. At the same time, this can restrain the optical measurement apparatus from lowering its reliability.

On the other hand, the wideband light source apparatus according to the present invention is employable in the optical measurement apparatus constructed as mentioned above (the optical measurement apparatus according to the present invention). In a preferred example, the wideband light source apparatus is employable in an optical measurement apparatus in which the light from an object to be measured irradiated with irradiation light is detected by a detector constructed by utilizing a material containing at least InGaAs. This wideband light source apparatus comprises a light source section for outputting light in a near-infrared region and an optical fiber optically connected to the light source section. This optical fiber inputs the near-infrared light from the light source section and outputs light having an intensity spectrum with an expanded spectrum width as the irradiation light.

In the wideband light source apparatus according to the present invention, the optical fiber generates light having such an intensity spectrum as to yield a positive wavelength-differentiated value in a wavelength region in at least a part of the wavelength region of 2 µm to 3 µm as the irradiation light.

In the structure mentioned above, the spectrum width of the irradiation light generated in the optical fiber is expanded by the optical fiber to at least the longer wavelength side within the near-infrared region. In this case, the amount of light received increases on the longer wavelength side of a wavelength where the light-receiving sensitivity of the detector constructed by utilizing a material containing at least InGaAs decreases, for example, whereby the wavelength dependency of the light-receiving sensitivity in the detector can be compensated for. Also, the measurable wavelength can effectively be expanded to the longer wavelength side, and thus can favorably be employed in an optical measurement apparatus in which the detector constructed by utilizing a material containing at least InGaAs detects the irradiation light having interacted with the object to be measured.

Preferably, in the wideband light source apparatus according to the present invention, the optical fiber expands the spectrum width of light incident thereon by utilizing a nonlinear phenomenon. In this case, the intensity spectrum characteristic of irradiation light can easily be controlled by choosing the optical fiber and adjusting a condition under which the seed light is inputted from the light source section to the optical fiber. Specifically, highly nonlinear optical fibers, dispersion-flat fibers, dispersion-shifted fibers, and the like can be used as the optical fiber, while polarization-maintaining optical fibers are more preferred. When the seed light from the light source section is fed into such an optical fiber, supercontinuum light is generated as the irradiation light. When the irradiation light is supercontinuum light, the structure of the wideband light source apparatus can be simplified.

Preferably, in the wideband light source apparatus according to the present invention, the optical fiber generates light whose maximum spectral intensity is higher by 3 dB or more than a minimum spectral intensity on the shorter wavelength side of a wavelength yielding the maximum spectral intensity in the wavelength region of 2 µm to 3 µm as the irradiation light. This structure can more reliably expand the measurable wavelength region, since the spectral intensity is higher by 3 dB or more on the longer wavelength side within the near-infrared region.

Preferably, in the wideband light source apparatus according to the present invention, the optical fiber generates light having such an intensity spectrum that a spectral intensity differing by 20 dB or less from the maximum spectral intensity is obtained in a spectrum width of 200 nm or more. Since the spectrum width of the irradiation light is 200 nm or more, optical measurement in a wider wavelength region is possible.

The wideband light source apparatus according to the present invention may further comprise an optical filter arranged downstream of the optical fiber where the light generated in the optical fiber reaches. This optical filter changes the intensity spectrum characteristic of the light generated in the optical fiber. This allows the optical filter to control the intensity spectrum characteristic of the irradiation light easily.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### Effects of the Invention

The optical measurement apparatus and the wideband light source apparatus employable therein according to the present invention make it possible in optical measurement utilizing light in the near-infrared region to expand the measurement range to the longer wavelength side in the near-infrared region.

### Brief Description of the Drawings

Fig. 1 is a block diagram showing a schematic structure of an embodiment of the optical measurement apparatus according to the present invention;
Fig. 2 is a graph showing light-receiving sensitivity characteristics of the detector shown in Fig. 1;
Fig. 3 is a graph showing an intensity spectrum characteristic of irradiation light outputted from the wideband light source apparatus shown in Fig. 1;
Fig. 4 is a graph showing light-receiving sensitivity characteristics of detectors constructed by utilizing extended InGaAs;
Fig. 5 is a diagram showing a schematic structure of a first embodiment of the wideband light source apparatus according to the present invention;
Fig. 6 is a diagram showing a schematic structure of a second embodiment of the wideband light source apparatus according to the present invention;
Fig. 7 is a block diagram illustrating a first structure of transmission characteristic measurement apparatus as a specific structure of the optical measurement apparatus shown in Fig. 1;
Fig. 8 is a block diagram illustrating a second structure of transmission characteristic measurement apparatus as a specific structure of the optical measurement apparatus shown in Fig. 1;
Fig. 9 is a block diagram illustrating a first structure of reflection characteristic measurement apparatus as a specific structure of the optical measurement apparatus shown in Fig. 1; and
Fig. 10 is a block diagram illustrating a second structure of reflection characteristic measurement apparatus as a specific structure of the optical measurement apparatus shown in Fig. 1.

### Description of the Reference Numerals

1, 1 A to 1D... optical measurement apparatus; 10, 10A, 10B...wideband light source apparatus; 11 ... light source section; 12... optical fiber; 13 ... collimator lens; 14... collective lens; 15 ... optical filter; 20...measurement section; 21...optical filter; 22...beam splitter; 23 ... reference mirror; 30 ... detector; 40... control system; and 50 ... output section.

### Best Modes for Carrying Out the Invention

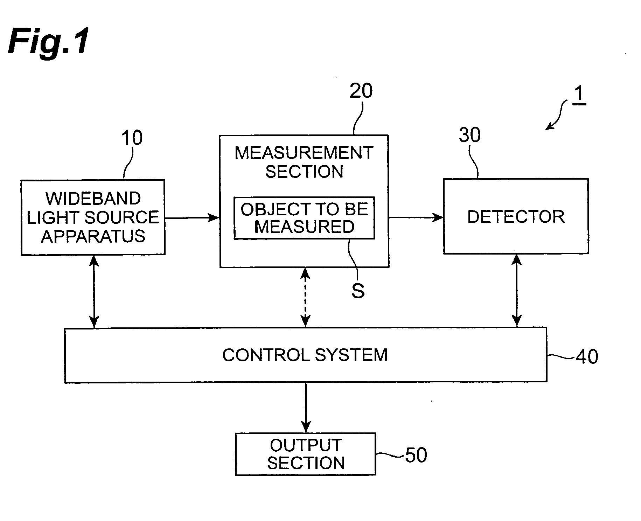

In the following, embodiments of the optical measurement apparatus and wideband light source apparatus according to the present invention will be explained in detail with reference to Figs. 1 to 10. In the explanation of the drawings, the same parts and the same constituents will be referred to with the same numerals while omitting their overlapping descriptions.

Fig. 1 is a block diagram showing a schematic structure of an embodiment of the optical measurement apparatus according to the present invention. The optical measurement apparatus 1 comprises a wideband light source apparatus 10, a measurement section 20 including an object to be measured S, and a detector 30, and is utilized for spectral measurement of the object S. In the optical measurement apparatus 1, irradiation light outputted from the wideband light source apparatus 10 irradiates the object S in the measurement section 20. On the other hand, light having interacted with the object S (the light arriving from the object S irradiated with the irradiation light) is detected by the detector 30. Examples of the light having interacted with the object S include light transmitted through the object S and light reflected/scattered by the object S.

The detector 30 is preferably an InGaAs detector, for example, though not restricted in particular as long as it can detect light having a wavelength included in the near-infrared region. Such an InGaAs detector is preferred in that it is inexpensive and operable at a temperature higher than 100 K (without requiring large-scale cooling). Namely, the InGaAs detector can improve the manufacturing cost and reliability of the optical measurement apparatus 1 employing the same. Also usable as detector materials are PbS, InSb, HgCdTe, and the like. For example, when held between Peltier devices so as to yield a three-tier structure, such a light-receiving device can be cooled to -80 degrees or lower, whereby a detector which is small and generates no vibrations is realized. This can also be cooled by a Stirling cooler, whereby the detection sensitivity is expected to be achieved at a practical level without liquid nitrogen.

The optical measurement apparatus 1 further comprises a control system 40 and an output section 50. The control system 40 includes a computer or the like, and controls the wideband light source apparatus 10 and detector 30. The control system 40 also enables feedback control and feedforward control. As will be explained later, the control system 40 also controls the measurement section when necessary. The control system 40 processes the result of detection from the detector 30 and feeds the processed result into the output section 50. The processing of the detection result performed in the control system 40 is a normal spectral processing. The output section 50 displays the detection result processed by the control system 40 onto a screen or outputs it to a storage medium and the like.

The optical measurement section 1 is characterized in that the wideband light source apparatus 10 generates irradiation light having such an intensity spectrum characteristic as to compensate for the wavelength dependency of the light-receiving sensitivity (which will also be referred to as light-receiving sensitivity characteristic in the following) in the detector 30.

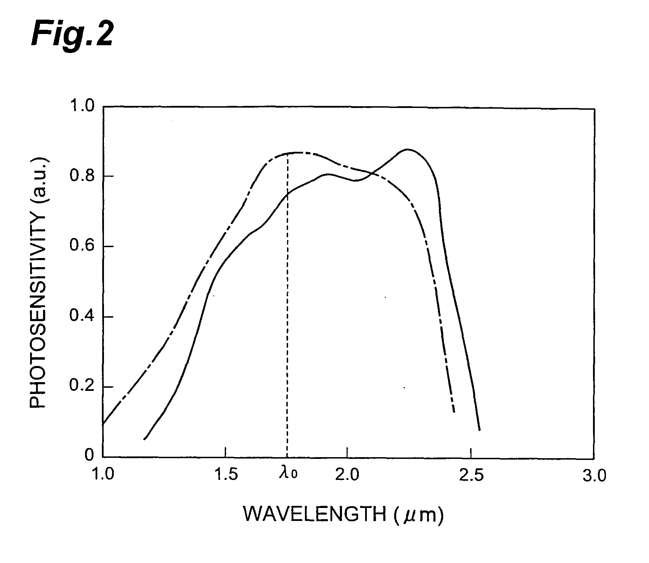

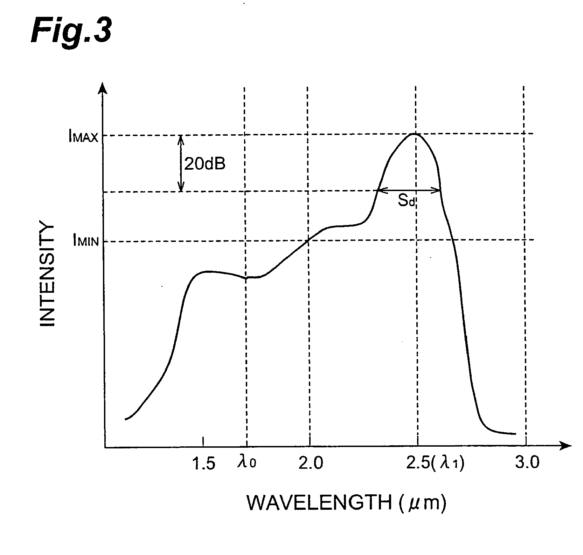

Utilizing Figs. 2 and 3, the relationship between the wavelength dependency of light-receiving sensitivity in the detector 30 and the intensity spectrum characteristic of the irradiation light outputted from the wideband light source apparatus 10 will be explained.

Fig. 2 is a graph showing light-receiving sensitivity characteristics of the detector. In Fig. 2, the characteristic represented by the dash-single-dot line indicates the light-receiving sensitivity characteristic of the detector 30 by itself, which is maximized at wavelength λ₀ and drastically decreases from near a wavelength of 2.2 µm. On the other hand, the characteristic represented by the solid line in Fig. 2 indicates the effective light-receiving sensitivity characteristic of the detector 30 with respect to the irradiation light outputted from the wideband light source apparatus 10.

Fig. 3 is a graph showing the intensity spectrum characteristic of irradiation light. As mentioned above, the spectrum characteristic of irradiation light has a maximal value on the longer wavelength side of the wavelength λ₀ yielding the maximum light-receiving sensitivity in the detector 30 so as to compensate for the wavelength dependency of light-receiving sensitivity in the detector 30. In the intensity spectrum characteristic of irradiation light, there is an area where the wavelength-differentiated value of its spectrum has a positive value in at least a part of the wavelength region of 2 µm to 3 µm, i.e., where the spectrum intensity tends to increase in the wavelength region of 2 µm to 3 µm.

Using the irradiation light having such an intensity spectrum characteristic can increase the amount of received light in the detector 30 in a wavelength region where the light-receiving sensitivity of the detector 30 decreases. As a result, the wavelength dependency of light-receiving sensitivity in the detector 30 can be compensated for as indicated by the solid line in Fig. 2. For example, as shown in Fig. 2, the wavelength where the light-receiving sensitivity drops by 20%, i.e., the sensitivity deteriorates by 1 dB, can be improved (shifted to the longer wavelength side) by about 100 nm. Also, the wavelength where the light-receiving sensitivity drops by 50% shifts to the longer wavelength side by 50 nm or more, and the wavelength where the light-receiving sensitivity drops by 10%, i.e., where the light-receiving sensitivity decreases by 10 dB, can be increased by about 50 nm. As a result, the expansion of measurement wavelength range is achieved.

From the viewpoint of enabling measurement in a longer wavelength region, it will be preferred if the intensity spectrum characteristic of irradiation light is such that, in the wavelength region of 2 µm to 3 µm (on the longer wavelength side in the near-infrared region), the maximum spectral intensity I_{MAX} is higher by 3 dB or more, more preferably 10 dB or more, than the minimum spectrum intensity I_{MIN} on the shorter wavelength side of the wavelength λ₁ yielding the maximum spectral intensity I_{MAX} as shown in Fig. 3. When the spectrum width S_{d} of irradiation light is defined by the width of spectral intensity lower by 20 dB than the maximum value of spectral intensity, it will be preferred if the spectrum width S_{d} is 200 nm or more. This enables optical measurement in a wider wavelength region.

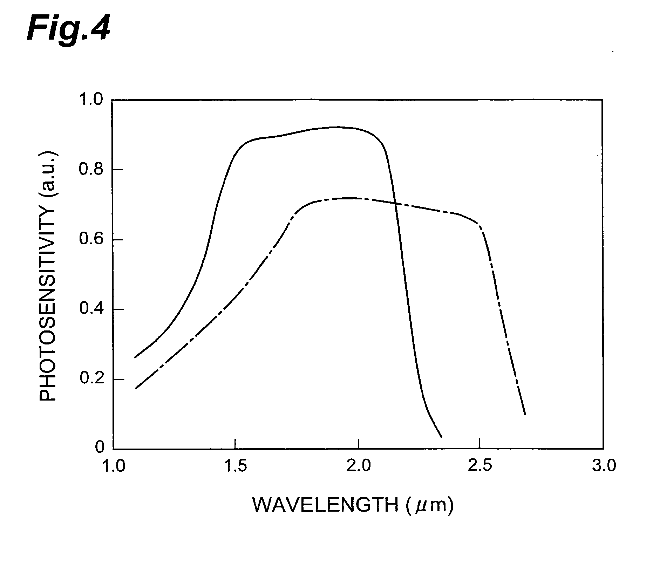

Meanwhile, a detector (extended InGaAS detector) constructed by utilizing a material known as extended InGaAs has conventionally been widening the measurable region up to the wavelength of about 2 µm as shown in Fig. 4. Fig. 4 is a graph showing examples of light-sensitivity of extended InGaAS detectors. The dash-single-dot line and solid line in Fig. 4 refer to different types of extended InGaAs. Such detectors also generate drastic drops in sensitivity near the wavelength of 2.5 µm as shown in Fig. 4. As a result, it has been difficult for the conventional optical measurement apparatus to perform high-sensitivity optical measurement at a wavelength of 2 µm or longer.

Further, high-sensitivity detectors are hard to manufacture in a wavelength region exceeding the wavelength of 2 µm, so that the manufacturing cost tends to increase, while the reliability tends to lower. Though a detector utilizing InSb can be represented as an example of detectors having sensitivity at a long wavelength, the detector is required to be cooled to 100 K or lower by utilizing a Stirling cooler, liquid nitrogen, or the like in order to realize a sufficiently high sensitivity characteristic. This complicates the structure of optical measurement apparatus and increases the manufacturing cost.

By contrast, the optical measurement apparatus 1 shown in Fig. 1 controls the intensity spectrum characteristic of the irradiation light outputted from the wideband light source apparatus 10 as mentioned above, so as to compensate for the drop in light-receiving sensitivity on the longer wavelength side of the detector 30, thereby enabling high-sensitivity optical measurement in a long wavelength region exceeding the wavelength of 2 µm as well. Since the optical measurement apparatus 1 can use a detector utilizing InGaAs or the like as the detector 30 as mentioned above, the manufacturing cost of the optical measurement apparatus 1 is cut down, while its reliability is improved.

The intensity spectrum characteristic of irradiation light shown in Fig. 3 has a wavelength region where the wavelength-differentiated value of the spectrum yields a positive value in the wavelength region of 2 µm to 3 µm. Therefore, this is particularly effective for a detector in which the wavelength-differentiated value of light-receiving sensitivity yields a negative value in at least a certain wavelength region in the wavelength region of 2 µm to 3 µm. It will be sufficient for the irradiation light if the wavelength-differentiated value of the spectrum has a positive value in a region in at least a part of the wavelength region of 2 µm to 3 µm.

The structure of the wideband light source apparatus 10 for realizing the intensity spectrum characteristic shown in Fig. 3 will now be explained specifically.

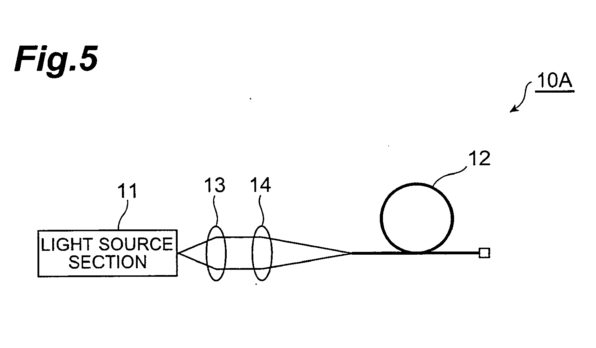

Fig. 5 is a diagram showing a schematic structure of a first embodiment of the wideband light source apparatus according to the present invention. The wideband light source apparatus 10A according to the first embodiment is a supercontinuum light source apparatus which generates so-called supercontinuum light. The wideband light source apparatus 10A comprises a light source section 11 and an optical fiber 12. A collimator lens 13 and a collective lens 14, which are used for guiding seed light outputted from the light source section 11 to the optical fiber 12, are arranged between the light source section 11 and the optical fiber 12.

The light source section 11 outputs seed light in the near-infrared region. An example of the light source section 11 is a pulsed light source. An example of the pulsed light source outputting seed light in the near-infrared region is a light source having a pulse center frequency of 1550 nm, a pulse repetition frequency of 50 MHz, an output power of 70 to 80 mW, and a pulse width of 300 fs.

Examples of the pulsed light source include (1) solid-state lasers employing Er glass, Yb glass, and the like as amplification media; (2) fiber lasers employing rare-earth-doped optical fibers such as Er-doped optical fibers, Yb-doped optical fibers, and Tm-doped optical fibers as amplification media; (3) light sources generating pulses by modulating outputs of CW lasers with external modulators such as EA modulators and lithium niobate modulators; (4) semiconductor short pulsed light sources; and (5) a light source which pulse-compresses beat waveforms of two CW laser light sources.

Further, in terms of pulse operation, light sources utilizing semiconductor saturable absorption mirrors, light sources utilizing carbon nanotubes, light sources constructed by fiber rings, light sources incorporating optical switches made of lithium niobate crystals and the like into cavities, and the like are exemplified. In the case of fiber lasers, the collimator lens 13 and collective lens 14 are unnecessary, whereby a structure in which one end of the optical fiber 12 is directly connected by fusion or the like to one end of a fiber included in the light source section 11 as the seed light source is possible.

While propagating the seed light outputted from the light source section 11, the optical fiber 12 expands the spectrum width of light by utilizing a nonlinear phenomenon, thereby generating so-called supercontinuum light. Examples of the optical fiber 12 include highly nonlinear optical fibers, dispersion-flat fibers, and dispersion-shifted fibers, while those of polarization-maintaining type are more preferred.

In the structure mentioned above, the seed light outputted from the light source section 11 is collimated by the collimator lens 13, then converged by the collective lens 14, and made incident on the optical fiber 12 thereafter. The seed light incident on the inside of the optical fiber 12 widens its spectrum width by the nonlinear phenomenon, and thus is outputted as supercontinuum light. This supercontinuum light is utilized as irradiation light having a predetermined intensity spectrum characteristic as shown in Fig. 3.

The structure of the wideband light source apparatus l0A shown in Fig. 5 can easily control the intensity spectrum characteristic of the irradiation light outputted from the optical fiber 12 by choosing an optical fiber having nonlinearity which can expand the spectrum width to a predetermined intensity spectrum characteristic, adjusting the condition under which light is fed into the optical fiber 12 by changing the positions of the collimator lens 13 and collective lens 14, and so forth. Therefore, the wideband light source apparatus 10A having a simple structure as shown in Fig. 5 can achieve a predetermined intensity spectrum characteristic. This can simplify the structure of the optical measurement apparatus 1 and lower its manufacturing cost. Further, since the intensity spectrum characteristic of irradiation light is easy to change, optical measurement is possible in a desirable wavelength region. Since the optical fiber 12 is utilized, the irradiation light outputted from the optical fiber 12 is easily fed into the measurement section 20.

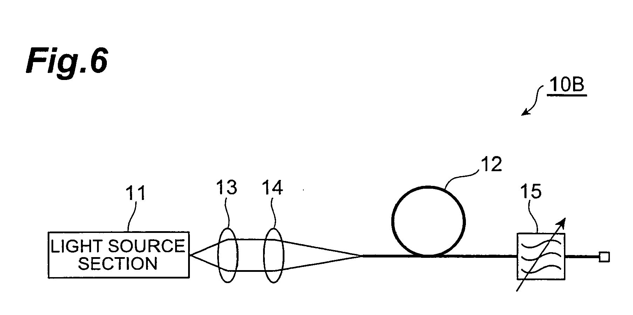

Fig. 6 is a diagram showing a schematic structure of a second embodiment of the wideband light source apparatus according to the present invention. The structure of the wideband light source apparatus 10B according to the second embodiment shown in Fig. 6 differs from that of the wideband light source apparatus 10A shown in Fig. 5 in that an optical filter 15 is provided downstream of the optical fiber 12. The optical filter 15 is an optical device for controlling the spectrum form (intensity spectrum characteristic) of irradiation light. The bandwidth of the optical filter 15 is preferably 20 nm or more in terms of full width at half maximum (FWHM). This makes it possible to use near-infrared rays in a wide wavelength region at the same time. From the viewpoint of compensating for the characteristic of the detector 30, it will be preferred if the optical filter 15 has a transmission characteristic which is upward to the right by 10 nm or more.

The optical filter 15 may be either of wavelength variable type or wavelength fixed type. When the optical filter 15 is of wavelength variable type as shown in Fig. 6, it can attain optimization in a wider measurement wavelength region while eliminating unnecessary wavelengths, and can cut out information per wavelength by scanning the wavelength of the optical filter 15. When the optical filter 15 is of wavelength variable type, it may be either operated manually or controlled by the control system 40. When the optical filter 15 is of fixed type, on the other hand, a stable light source characteristic can be realized at low cost.

Four specific structures of the optical measurement apparatus will now be explained. In more specific structures of the optical measurement apparatus shown in the following, the wideband light source apparatus 10 can employ any of the wideband light source apparatus 10A, 10B according to the above-mentioned first and second embodiments.

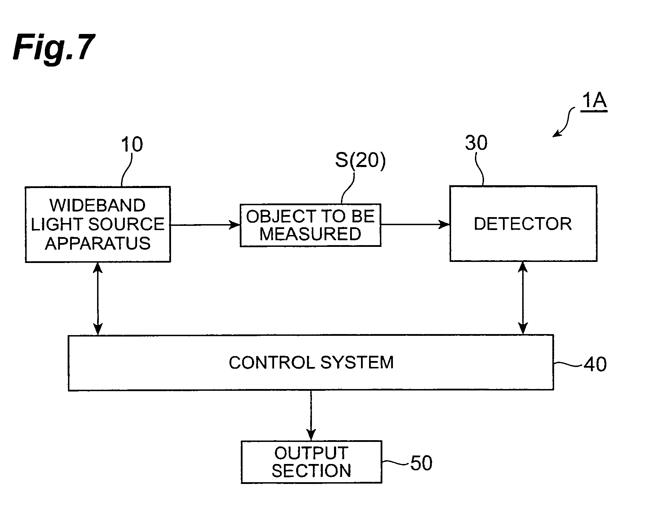

Fig. 7 is a block diagram showing a first structure of transmission characteristic measurement apparatus as a specific structure of the optical measurement apparatus according to the present invention. In this transmission characteristic measurement apparatus 1A, an object to be measured S is a measurement section 20. In the transmission characteristic measurement apparatus 1A, irradiation light outputted from a wideband light source apparatus 10 irradiates the object to be measured S, and the light transmitted through the object S is detected by a detector 30. Examples of the object S include gases such as methane and liquids such as alcohol and milk sealed in a glass tube or the like. Solids such as thinly sliced biological tissues and minerals are also objects.

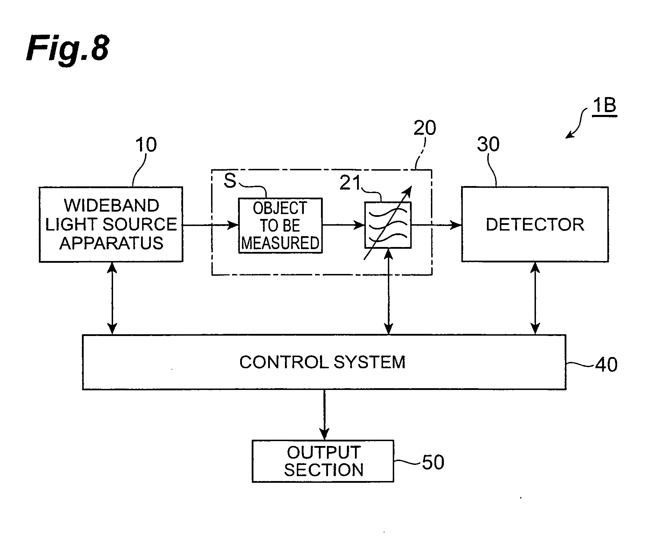

Fig. 8 is a block diagram showing a second structure of transmission characteristic measurement apparatus as a specific structure of the optical measurement apparatus according to the present invention, and is an applied example of the transmission characteristic measurement apparatus 1A shown in Fig. 7. In this transmission characteristic measurement apparatus 1B, a measurement section 20 has an object to be measured S and an optical filter 21. The optical filter 21 is arranged between the object S and a detector 30. The optical filter 21 can selectively take out a desirable wavelength component from the light having interacted with the object S and eliminate an unnecessary wavelength component which becomes a background noise.

When the optical filter 21 is of wavelength variable type while a control system 40 performs synchronous control, respective quantities of received light corresponding to the wavelength components can be measured. Therefore, the transmission characteristic measurement apparatus 1 B enables high-sensitivity measurement. Employable as the optical filter 21 are not only semiconductor multilayer films, but also wavelength-selective devices such as gratings, Fabry-Perot filters, fiber Bragg gratings, and prisms.

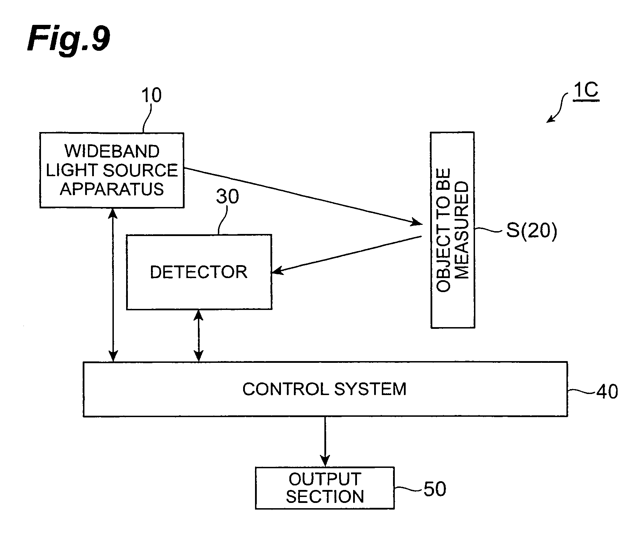

Fig. 9 is a block diagram showing a first structure of reflection characteristic measurement apparatus as a specific structure of the optical measurement apparatus according to the present invention. In this reflection characteristic measurement apparatus 1C, an obj ect to be processed S is a measurement section 20. Irradiation light outputted from a wideband light source apparatus 10 irradiates the object to be measured S, and the light reflected by the object S (light having interacted with the object S) is detected by a detector 30. Scattered light from the object S can also be measured in the same structure.

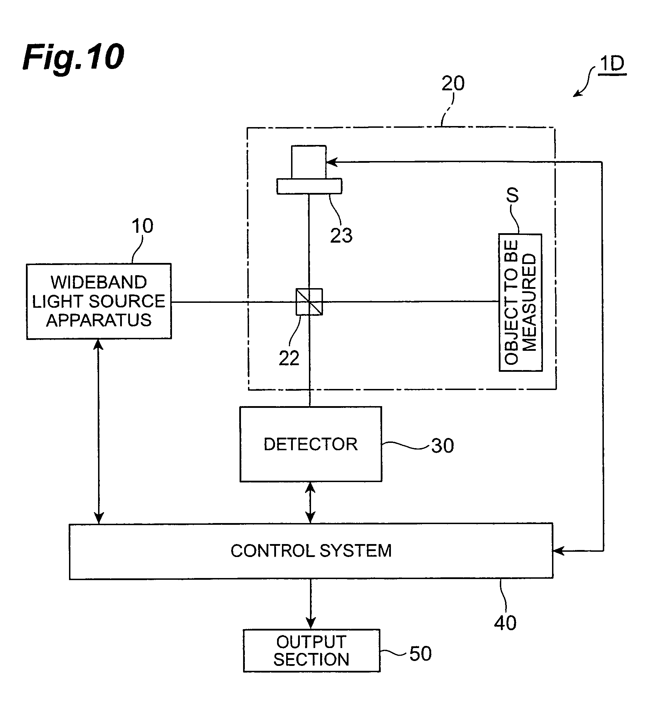

Fig. 10 is a block diagram showing a second structure of reflection characteristic measurement apparatus as a specific structure of the optical measurement apparatus according to the present invention, illustrating an apparatus structure utilizing Michelson interferometry in order to perform reflection and scattering measurement with a higher sensitivity. In this reflection characteristic measurement apparatus 1D, a measurement section 20 has an object to be measured S, a beam splitter 22 such as typical beam splitter or polarization beam splitter, and a reference mirror 23.

In the second structure of reflection characteristic measurement apparatus 1D, the irradiation light outputted from the wideband light source apparatus 10 is divided by the beam splitter 22 into light returning after irradiating the object to be measured S (light having interacted with the object S) and reference light reflected by the reference mirror 23. A detector 30 detects interference light in which the return light and reference light interfered with each other, and analyzes information of the object S from the result of interference. For example, information of the object S in the depth direction can be obtained by controlling the position of the reference mirror 23 with a control system 40.

Though preferred embodiments of the present invention are explained in the foregoing, the present invention is not limited to the embodiments mentioned above. The irradiation light is not limited to the supercontinuum light mentioned above as long as it has such an intensity spectrum characteristic as to compensate for the light-receiving sensitivity of the detector 30. Therefore, the wideband light source apparatus 10 (10A, 10B) is not limited to supercontinuum light source apparatus.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

### Industrial Applicability

The optical measurement apparatus and the wideband light source apparatus employable therein according to the present invention are applicable to various optical measurement techniques in the near-infrared region.

## Claims

1. An optical measurement apparatus utilizing light in a near-infrared region, said optical measurement apparatus comprising:
a wideband light source apparatus for outputting irradiation light to irradiate an object to be measured, said wideband light source apparatus having a light source section, and an optical fiber in which seed light outputted from said light source section is inputted and which generates light having an intensity spectrum with an expanded spectrum width; and
a detector for detecting light arriving from the object irradiated with the irradiation light,
wherein said wideband light source apparatus outputs light having an intensity spectrum with an expanded spectrum width as the irradiation light within said optical fiber so that such a spectral intensity as to compensate for a decrease in a light-receiving sensitivity of said detector in a wavelength region in at least a part of a sensitivity-decreasing region of 2 µm to 3 µm where the light-receiving sensitivity of said detector decreases in the near-infrared region.

2. An optical measurement apparatus according to claim 1, wherein said wideband light source apparatus outputs irradiation light having such an intensity spectrum as to yield a positive wavelength-differentiated value in a wavelength region in at least a part of the sensitivity-decreasing region of 2 µm to 3 µm.

3. An optical measurement apparatus according to claim 1, wherein said detector has an operation temperature of 100 K or more.

4. An optical measurement apparatus according to claim 1, wherein said optical fiber includes an optical fiber in which the seed light from said light source section is inputted and which generates supercontinuum light as the irradiation light.

5. An optical measurement apparatus according to claim 1, wherein said wideband light source apparatus outputs irradiation light whose maximum spectral intensity is higher by 3 dB or more than a minimum spectral intensity on the shorter wavelength side of a wavelength yielding the maximum spectral intensity in the sensitivity-decreasing region of 2 µm to 3 µm.

6. An optical measurement apparatus according to claim 1, wherein said wideband light source apparatus outputs irradiation light having such an intensity spectrum that a spectrum width yielding a spectral intensity differing by 20 dB or less from the maximum spectral intensity is 200 nm or more.

7. An optical measurement apparatus according to claim 1, wherein said wideband light source apparatus further comprises a different optical filter arranged downstream of said optical fiber where the light generated in said optical fiber reaches, said different optical filter changing the intensity spectrum characteristic of the light generated in said optical fiber.

8. An optical measurement apparatus according to claim 1, wherein said detector is constructed by utilizing a material containing at least InGaAs.

9. A wideband light source apparatus employable in an optical measurement apparatus for detecting light from an object to be measured irradiated with irradiation light with a detector constructed by utilizing a material containing at least InGaAs, said wideband light source apparatus outputting the irradiation light to the object and comprising:
a light source section for outputting seed light in a near-infrared region; and
an optical fiber optically connected to said light source section, said optical fiber in which the seed light outputted from said light source section is inputted and which generates light having an intensity spectrum with an expanded spectrum width,
wherein said optical fiber generates light having an intensity spectrum whose wavelength-differentiated value becomes positive in a wavelength region in at least a part of a wavelength region of 2 µm to 3 µm.

10. A wideband light source apparatus according to claim 9, wherein said optical fiber includes an optical fiber generating light having an intensity spectrum with an expanded spectrum width by utilizing a nonlinear phenomenon.

11. A wideband light source apparatus according to claim 9, wherein said optical fiber includes an optical fiber in which the seed light from said light source section is inputted and which generates supercontinuum light as the irradiation light.

12. A wideband light source apparatus according to claim 9, wherein said optical fiber outputs irradiation light whose maximum spectral intensity is higher by 3 dB or more than a minimum spectral intensity on the shorter wavelength side of a wavelength yielding the maximum spectral intensity in the sensitivity-decreasing region of 2 µm to 3 um.

13. A wideband light source apparatus according to claim 9, wherein said optical fiber outputs irradiation light having such an intensity spectrum that a spectrum width yielding a spectral intensity differing by 20 dB or less from the maximum spectral intensity is 200 nm or more.

14. A wideband light source apparatus according to claim 9, further comprising a different optical filter arranged downstream of said optical fiber where the light generated in said optical fiber reaches, said different optical filter changing the intensity spectrum characteristic of the light generated in said optical fiber.
